# EUROPEAN PATENT APPLICATION

(11) **EP 4 667 734 A1**
(43) Date of publication of application: **24.12.2025**
(21) Application number: 25181703.7
(22) Date of filing: 10.06.2025
(51) Int. Cl.: F02F 7/00

(54) **A COVER ASSEMBLY FOR AN ENGINE SYSTEM**

(30) Priority: 18.06.2024 US 202463661122 P; 09.06.2025 US 202519231978
(71) Applicant: Cummins, Inc., Columbus, Indiana 47201 (US)
(72) Inventor: WILSON, Joshua, Indiana, 47201 (US)
(74) Representative: Cleveland Scott York

(57) **Abstract**

A cover assembly for an engine includes a gear plate. The gear plate includes a plate body defining an opening, and a plate wall contiguous with the plate body along the opening and extending at a first angle away from the plate body. The cover assembly also includes a cover including a cover rim contacting the plate body along the opening and a cover body positioned adjacent to the plate wall and defining a groove. The groove is defined by a first groove surface, a second groove surface positioned a distance away from the first groove surface, and a third groove surface extending at a second angle from the first groove surface to the second groove surface. The cover assembly also includes a sealing member positioned in the groove and contacting the plate wall.

## Description

### CROSS-REFERENCE TO RELATED APPLICATIONS

This application claims priority to United States Provisional Patent Application No. 63/661,122, filed June 18, 2024 and the contents of which are incorporated herein by reference.

### TECHNICAL FIELD

The present application relates generally to a cover assembly for an engine.

### BACKGROUND

Engine systems include fuel pumps that provide fuel to cylinders of the engine. The fuel pump and various components that determine the operation of the fuel pump are constrained to tight configurations within the engine system.

### SUMMARY

According to one embodiment, a cover assembly for an engine includes a gear plate. The gear plate includes a plate body defining an opening, and a plate wall contiguous with the plate body along the opening. The plate wall extends at a first angle away from the plate body. The cover assembly also includes a cover including a cover rim that contacts the plate body along the opening, and a cover body positioned adjacent to the plate wall and defines a groove. The groove is defined by a first groove surface, a second groove surface positioned a distance away from the first groove surface, and a third groove surface extending at a second angle from the first groove surface to the second groove surface. The cover assembly also includes a compression ring positioned in the groove and contacting the plate wall.

According to another embodiment, an engine system assembly comprises a cover assembly and a pump shaft. The cover assembly comprises a gear plate, a cover, and a sealing member. The gear plate comprises a plate body defining an opening and a plate wall contiguous with the plate body along the opening. The plate wall extends at a first angle away from the plate body. The plate wall defines a plate cavity extending from the opening to an edge of the plate wall. The cover comprises a cover rim contacting the plate body and a cover body positioned adjacent to the plate wall and defining a groove. The groove is defined by a first groove surface, a second groove surface positioned a distance away from the first groove surface, and a third groove surface extending at a second angle from the first groove surface to the second groove surface. The sealing member is positioned in the groove and contacts the plate wall. A portion of the pump shaft extends into the plate cavity adjacent to the plate wall toward the opening.

### BRIEF DESCRIPTION OF THE DRAWINGS

The disclosure will become more fully understood from the following detailed description, taken in conjunction with the accompanying Figures, wherein like reference numerals refer to like elements unless otherwise indicated, in which:
FIG. 1 is a front view of a cover assembly for an according to one embodiment;
FIG. 2 is a front view of a portion of the cover assembly of FIG. 1;
FIG. 3 is a cross-sectional view of the cover assembly of FIG. 1, shown with a portion of an example engine system;
FIG. 4 is cross-sectional view of the cover assembly of FIG. 1;
FIG. 5 is a perspective view of a cover of the cover assembly of FIG. 1;
FIG. 6 is a cross-sectional view of the cover of FIG. 6;
FIG. 7 is a cross-sectional view of a gear plate of the cover assembly of FIG. 1;
FIG. 8 is a cross-sectional view of a portion of the cover assembly of FIG. 1 wherein the cover is positioned in a first position; and
FIG. 9 is another cross-sectional view of a portion of the cover assembly of FIG. 1 wherein the cover is positioned in a second position.

It will be recognized that the Figures are schematic representations for purposes of illustration. The Figures are provided for the purpose of illustrating one or more implementations with the explicit understanding that the Figures will not be used to limit the scope or the meaning of the claims.

### DETAILED DESCRIPTION

Following below are more detailed descriptions of various concepts related to, and implementations of, methods, and apparatuses, of a cover assembly for an internal combustion engine system. The various concepts introduced above and discussed in greater detail below may be implemented in any of a number of ways, as the described concepts are not limited to any particular manner of implementation. Examples of specific implementations and applications are provided primarily for illustrative purposes.

Internal combustion (IC) engine systems (e.g., hydrogen IC engine systems, etc.) include a gear housing defining a space for various components of the system, such as a fuel pump, pump gears, and a pump shaft. The gear housing is enclosed by a gear plate defining at least one opening (e.g., aperture, hole, etc.) for accessing various components within the gear housing. A cover is placed in the opening to impede the flow of debris through the opening into the space defined by the gear housing.

Implementations herein relate to a cover assembly for an engine system including a gear plate and a cover. The gear plate defines at least one opening for accessing various parts within the gear housing (e.g., for maintenance, etc.). The cover is positionable within the opening such that the cover impedes flow through the opening during engine system operation.

According to various embodiments and as shown in the figures, a cover assembly 100 for an engine system 300 includes a gear plate 102. The gear plate 102 includes a plate body 104 defining an opening 108, and a plate wall 304 contiguous with the plate body 104 along the opening 108. The plate wall 304 extends at a first angle A₁ away from the plate body 104. The cover assembly 100 also includes a cover 110. The cover 110 includes a cover rim 326 that contacts the plate body 104 and a cover body 310 positioned adjacent to the plate wall 304 and defines a groove 316. The groove 316 is defined by a first groove surface 318, a second groove surface 320 positioned a distance away from the first groove surface 318, and a third groove surface 322 extending at a second angle A₂ from the first groove surface 318 to the second groove surface 320. The cover assembly 100 also includes a sealing member, for example a compression ring 330, positioned in the groove 316 and in contact with the plate wall 304.

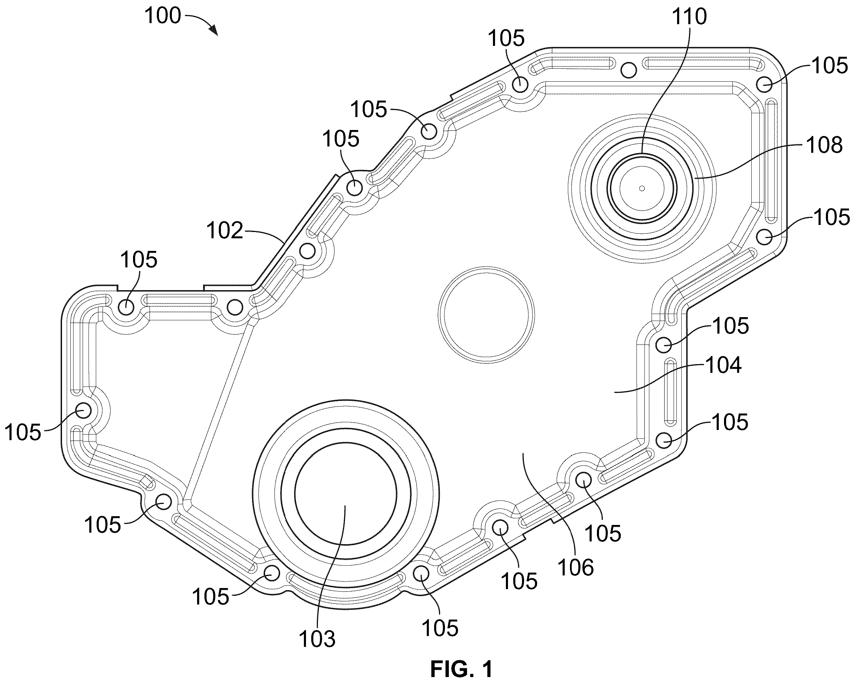

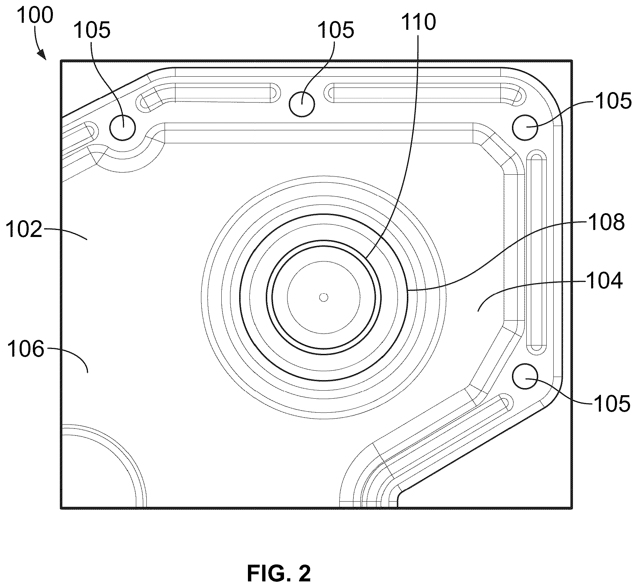

Referring to FIGS. 1-2, various front views of an example of the cover assembly 100 for an engine system are shown. The cover assembly 100 includes the gear plate 102. The gear plate 102 is configured to enclose a portion of the engine system. For example, the gear plate 102 may enclose an end of a gear housing containing various components of the engine system (e.g., a gearbox, a pump gear, a pump shaft, etc.).

The gear plate 102 includes the plate body 104. The plate body 104 is a structure configured to impede flow (e.g., block flow, etc.) through the gear plate 102. The plate body 104 can be a solid structure comprised of a metal.

The gear plate 102 defines a plurality of apertures 105 along an edge of the gear plate 102. The plurality of apertures 105 are each configured to receive a screw (e.g., a bolt, securement mechanism, etc.) to secure the gear plate 102 to the engine system (e.g., the gear housing of the engine system, etc.).

The plate body 104 includes a first side 106. The first side 106 is facing front accessories of a drivetrain. For example, the first side 106 of the gear plate 102 is adjacent to a belt, such that the belt passes (e.g., moves, etc.) along the first side of the gear plate 102 preferably without touching the cover assembly 100.

The plate body 104 also defines the opening (e.g., an aperture, an access hole, etc.) 108. The opening 108 is substantially circular in shape, but other shapes are possible (e.g., square, oval, etc.). The opening 108 provides access through the plate body 104 to various components of the engine system. For example, the opening 108 is positioned such that a fuel pump, a fuel pump shaft, a pump gear, or other engine components may be accessed (e.g., serviced, examined, etc.) through the opening 108. The opening 108 facilitates access to components of the engine system without removing (e.g., decoupling, etc.) the gear plate 102 from the engine system. In some embodiments, the gear plate 102 may include a plurality of openings 108. Each of the plurality of openings 108 facilitating access to different components of the engine system.

The cover assembly 100 also includes the cover 110. As shown in FIGS. 1-2, the cover 110 is positioned in the opening 108 (e.g., positioned in a second position, an inserted position, etc.). In other embodiments, the cover 110 may be removed from the opening 108 (e.g., for servicing, maintenance, etc.). The cover 110 is configured to selectively impede flow through the opening 108 of the gear plate 102. For example, the cover 110 impedes the flow of air and lubricant (e.g., oil, fuel, etc.) through the gear plate 102 (e.g., through the gear plate 102, out of a cavity defined by a gear housing, etc.) when positioned in the opening 108.

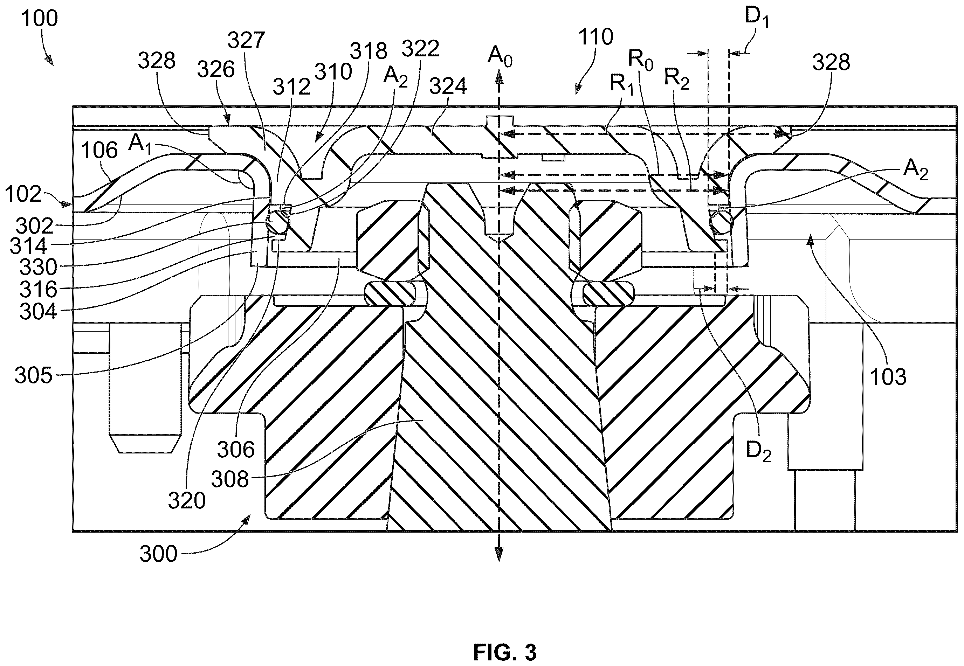

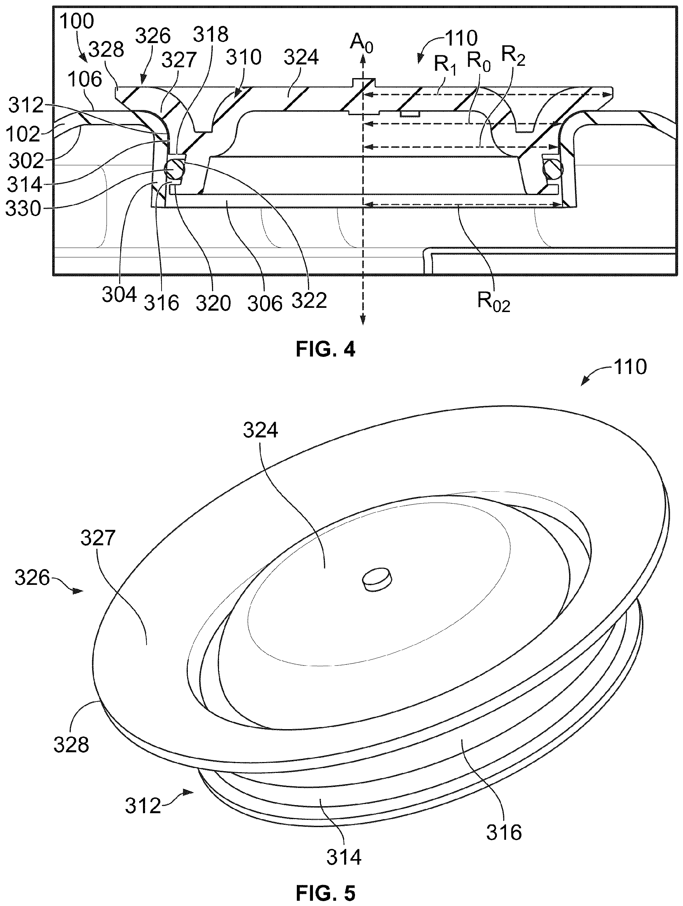

Now referring to FIGS. 3-9, various views of the gear plate 102 and the cover 110 are shown. FIGS. 3 and 4 are cross-sectional views of the cover assembly 100. As previously discussed, and as shown in the embodiment of FIGS. 3 and 4, the cover assembly 100 is configured to cover (e.g., enclose, etc.) a portion of the engine system 300.

The plate body 104 defines a second side 302 positioned opposite the first side 106. The second side 302 faces various components of the engine system 300 (e.g., a pump, gears, shaft, etc.).

The gear plate 102 includes the plate wall 304. The plate wall 304 is contiguous with the plate body 104 along the opening 108. The plate wall 304 extends from the plate body 104 (e.g., along the opening 108, along the perimeter of the opening 108) at a first plate wall angle A₁ (e.g., a first angle, an acute angle, etc.). For example, the first plate wall angle A₁ may be in range between 80 degrees to 89 degrees relative to the plate body 104, preferably between 85 degrees and 89 degrees relative to the plate body 104. For example, the first plate wall angle A₁ being in a range between 85 degrees and 89 degrees relative to the plate body 104 increases an insertion force (e.g., an initial press force, etc.) required to position the cover 110 in the opening 108.

For example, the first plate wall angle A₁ requires the user to provide a higher initial insertion force to position a portion of the cover 110 into the opening 108 (e.g., past a plane defined by the plate body 104, etc.). Because of the higher initial insertion force, the user can receive a positive feedback feel once the cover 110 is fully seated in the opening 108. According to this embodiment, the insertion force is greater than the removal force. However, the force differential between the required insertion force and the required removal force decreases (e.g., a difference between the insertion force and removal force is decreased, etc.) due to the first plate wall angle A₁ and the geometry of the cover 110 as described in more detail below.

The plate wall 304 defines a plate cavity 306. For example, the plate cavity 306 extends from the opening 108 to an edge 305 of the plate wall 304. The edge 305 is positioned opposite the opening 108 defined by the plate body 104.

The engine system 300 includes components such as a pump shaft 308. The pump shaft 308 faces the second side 302 of the plate body 104 and is positioned such that when the cover 110 is removed from the opening 108, the pump shaft 308 is visible through the opening 108. As shown in FIG. 3, a portion of the pump shaft 308 extends into the plate cavity 306 adjacent to the plate wall 304 toward the opening 108. The pump shaft 308 is configured to rotate and provide a rotational input from pump gears to a fuel pump.

As shown in FIGS. 3-4 and 7, the opening 108 defines an opening center axis Aₒ and an opening radius Rₒ. The opening radius Rₒ is defined as a distance from the opening center axis Aₒ to the plate body 104. According to this embodiment, the cover 110 and the pump shaft 308 are centered on the opening center axis Aₒ.

As shown in FIGS. 3-6, the cover 110 includes the cover body 310. The cover body 310 is positioned within the opening 108. The cover body 310 is in contact with the plate wall 304 when the cover body 310 is positioned in the opening 108. The cover body 310 is configured to impede air and/or fluid from flowing through the opening 108.

The cover body 310 includes a side body 312. The side body 312 is positioned adjacent to the plate wall 304 when the cover 110 is positioned in the opening 108. The side body 312 is substantially circular in shape and sized to fit within the opening 108.

The side body 312 defines a side surface 314. The side surface 314 is an outer surface of the side body 312 that can contact the plate wall 304. In some embodiments, there is a small gap between the side surface 314 and the plate wall 304.

The side body 312 also defines the groove 316. The side body 312 defines the first groove surface 318, the second groove surface 320, and the third groove surface 322 that collectively define the groove 316. The first groove surface 318 extends inward towards the opening center axis Aₒ at an angle (e.g., perpendicular to the side surface 314, etc.). According to this embodiment, the first groove surface 318 extends perpendicularly inward from the side surface 314. The second groove surface 320 also extends inward toward the opening center axis Aₒ at an angle (e.g., perpendicular to the side surface 314, etc.). According to this embodiment, the second groove surface 320 is positioned a distance away from (e.g., a distance along a vertical axis, positioned vertically away from, etc.) the first groove surface 318 and also extends perpendicularly inward towards the opening center axis Aₒ.

The third groove surface 322 extends at an angle A₂ (e.g., the second angle, an oblique angle, an acute angle, etc.) from the first groove surface 318 to the second groove surface 320. The angle A₂ of the third groove surface 322 corresponds to the removal force required to remove the cover 110 from the opening 108. For example, the third groove surface 322 extends at an angle in a range between 77 degrees and 89 degrees relative to the first groove surface 318. When the angle A₂ is between 77 degrees and 89 degrees (e.g., not equal to 90 degrees, not perpendicular etc.) the removal force required to remove the cover 110 from the opening 108 is less than the removal force required to remove the cover 110 from the opening 108 when the third groove surface 322 is perpendicular to each of the first groove surface 318 and the second groove surface 320.

By the third groove surface being positioned at the angle A₂ relative to the first groove surface 318 and the second groove surface 320, and the plate wall 304 extending from the plate body 104 at an angle A₁, a force differential (e.g., a difference in force required for insertion versus removal, etc.) between the insertion force and the removal force is reduced. For example, the insertion force is decreased (e.g., relative to a force required when each of the third groove surface 322 is perpendicular to the first groove surface 318 and the second groove surface 320 and when and the plate wall 304 is perpendicular to the plate body 104, etc.) and the removal force is increased (e.g., relative to a force required when each of the third groove surface 322 is perpendicular to the first groove surface 318 and the second groove surface 320 and when and the plate wall 304 is perpendicular to the plate body 104, etc.). Thus, the difference between the insertion force and the removal force is less than a difference between an insertion force and a removal force when each of the third groove surface 322 is perpendicular to the first groove surface 318 and the second groove surface 320 and when and the plate wall 304 is perpendicular to the plate body 104. For example, when each of the third groove surface 322 is perpendicular to the first groove surface 318 and the second groove surface 320 and when and the plate wall 304 is perpendicular to the plate body 104 (e.g., A₂ is equal to 90 degrees, etc.) the insertion force is approximately 2x (e.g., two times, double, etc.,) that of the removal force. Instead, when the first plate wall angle A₁ is in a range between 80 and 89 degrees (e.g., about 87 degrees, etc.) and the angle A₂ of the third groove surface 322 is between 77 degrees and 89 degrees (e.g., about 79 degrees, etc.), then the insertion force is approximately 1.1x (e.g., 1.1 times, etc.) that of the removal force.

The first groove surface 318 is longer (e.g., has a greater length, etc.) than the second groove surface 320. For example, the first groove surface 318 extends farther towards the opening center axis Aₒ than the second groove surface 320. Thus, the groove 316 has a variable depth. For example, the groove 316 has at least a first depth D₁ defined by the first groove surface 318. The groove 316 also has a second depth D₂ defined by the second groove surface 320. The first depth D₁ is greater than the second depth D₂. For example, the depth the groove 316 decreases (e.g., when moving vertically downward, along the third groove surface 322, etc.) between the first groove surface 318 and the second groove surface 320.

The cover 110 further includes a cover cap 324. The cover cap 324 is coupled to the cover body 310. The cover cap 324 extends across the opening 108. For example, the cover cap 324 extends across a plane parallel to the plate body 104. The cover cap 324 is configured to impede (e.g., prevents, blocks, etc.) flow through the opening 108. As shown in FIGS. 3-6, the cover cap 324 is dome shaped.

The cover 110 also includes the cover rim 326. The cover rim 326 contacts the first side 106 of the plate body 104. The cover rim 326 is configured to contact the first side 106 such that the cover rim 326 impedes movement of the cover 110 through the opening 108. For example, the cover 110 is inserted into the opening 108 on the first side 106 and the cover 110 is fully seated (e.g., positioned in an operating position, in a second position, etc.) once the cover rim 326 is in contact with the first side 106 of the plate body 104.

The cover rim 326 is continuous with the side body 312 and includes a curved portion (e.g., a contact surface, etc.) 327 extending away from the side body 312. The curved portion 327 defines a rim radius of curvature (e.g., a first radius of curvature, etc.) being in a range between 36 degrees to 40 degrees.

The cover rim 326 defines a rim radius R₁ (e.g., a first radius, etc.) of the cover 110. The rim radius R₁ extends from an edge 328 of the cover rim 326 to the opening center axis Aₒ. The rim radius R₁ is greater than (e.g., larger than, longer than, etc.) the opening radius Rₒ. The rim radius R₁ being greater than the opening radius Rₒ facilitates contact between the cover rim 326 and the plate body 104 and impedes the movement of the cover 110 through the opening 108.

The side body 312 defines a body radius R₂ (e.g., a second radius, etc.) of the cover 110. The body radius R₂ extends from the side surface 314 to the opening center axis Aₒ. The body radius R₂ is smaller than the rid radius R₁. The body radius R₂ is a similar length as the opening radius Rₒ (e.g., within a few mm difference, etc.). However, the body radius R₂ may be slightly smaller in length than the opening radius Rₒ to facilitate the movement of the side body 312 into the opening 108.

As shown in FIGS. 3 and 4, the cover assembly 100 further includes the compression ring 330 (e.g., a retention ring, an O-ring, a gasket, etc.). The compression ring 330 is positioned in the groove 316 e.g., within a groove cavity, within a cavity defined by the groove, etc.) of the cover 110. The compression ring 330 is in contact with the plate wall 304. According to this embodiment, the compression ring 330 is cylindrical (e.g., spheric when viewed cross-sectionally, etc.).

The compression ring 330 forms a seal with the plate wall 304. For example, the compression ring 330 forms a seal with the plate wall 304 impeding the flow of air and/or fluid through the opening 108. The compression ring 330 comprises a deformable material (e.g., a synthetic polymer, a rubber, etc.) such that the compression ring 330 can deform (e.g., compress, flatten, etc.) during placement of the cover 110 and may remain in a deformed state (e.g., compressed, etc.) when positioned within the opening 108 to form a seal with the plate wall 304.

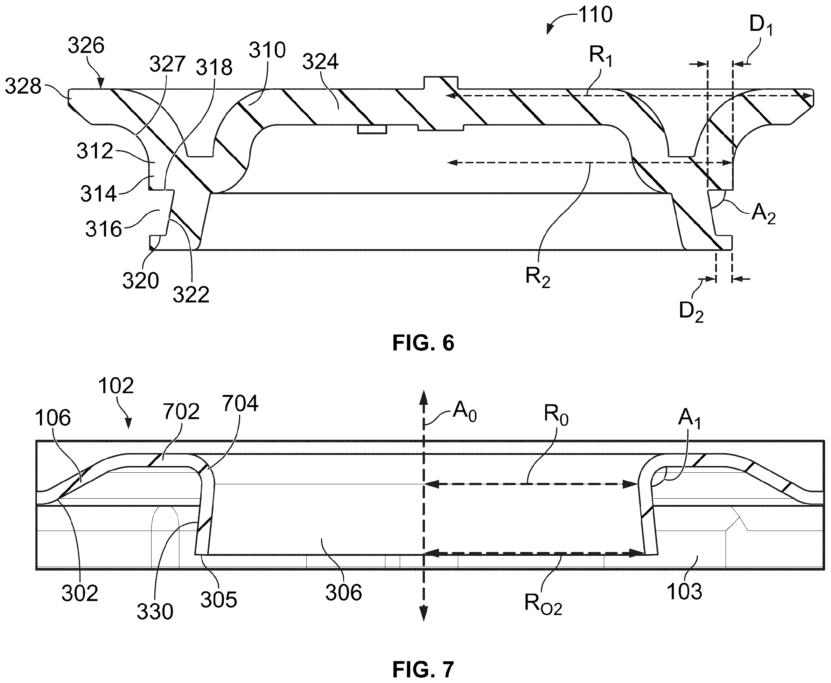

Now referring to FIG. 7, a cross-sectional view of the gear plate 102 is shown. As shown in FIG. 7, the gear plate 102 includes a raised portion 702. The raised portion 702 is positioned around a circumference of the opening 108. The raised portion 702 increases vertically a portion of the cavity 103 defined by the gear plate 102. For example, the raised portion 702 allows the pump shaft 308 to extend into the plate cavity 306 but not past the raised portion 702 of the gear plate 102 (e.g., not past the gear plate 102, does not exceed the gear plate 102, etc.).

As shown in FIG. 7, the plate wall 304 extends from the raised portion 702 into the cavity 103 at the first plate wall angle A as previously described. For example, the first plate wall angle A₁ of the plate wall 304 is less than 90 degrees (e.g., an acute angle, etc.) relative to the raised portion 702.

As previously described, the plate wall 304 is contiguous with the gear plate 102. The raised portion 702 and the plate wall 304 define a transition edge 704. The transition edge 704 is curved (e.g., ached, etc.) and defines a radius of curvature. The transition edge 704 is in contact with the curved portion 327 when the cover 110 is positioned in the opening 108 (e.g., the second position, etc.). The transition edge 704 is configured to facilitate the insertion and removal of the cover 110.

As shown in FIG. 7 the plate cavity 306 varies in diameter based on the angle (e.g., an angle, the first plate wall angle A₁, etc.) of the plate wall 304. For example, the plate wall 304 defines a second opening radius Rₒ₂ that is greater than the opening radius Rₒ. As described in more detail below, the varying diameter of the plate cavity 306 defined by the plate wall 304 biases the cover 110 towards the edge 305 of the of plate wall 304 (e.g., downward, into the plate cavity 306, etc.).

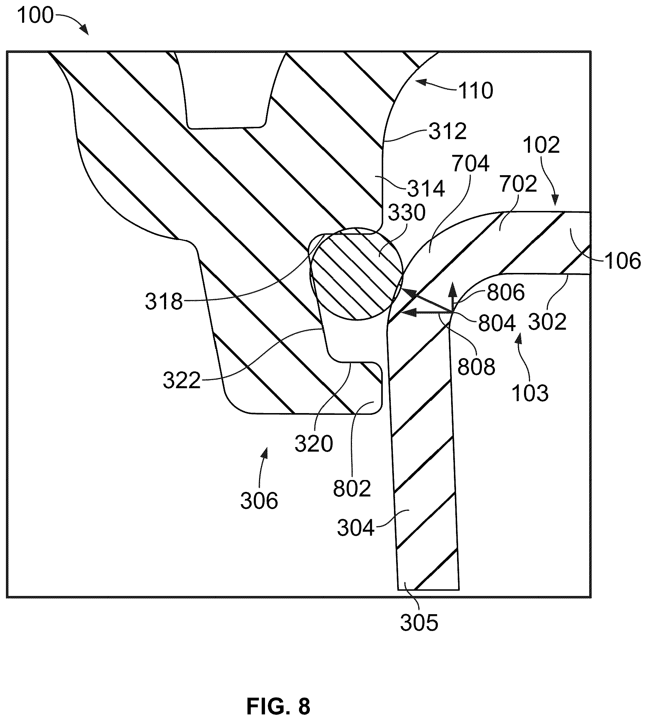

FIG. 8 is another cross-sectional view of the cover assembly 100. According to this embodiment, the cover 110 is partially inserted into the plate cavity 306 (e.g., positioned in a second position, a transition position, an insertion position, etc.). For example, in FIG. 8 the cover 110 is being inserted into the plate cavity 306.

The cover 110 is partially inserted into the plate cavity 306 such that a lower edge 802 of the cover body 310 is positioned within the plate cavity 306 (e.g., positioned below the opening 108, etc.) but the curved portion 327 is not yet in contact with the transition edge 504 of the plate body 104.

As shown in FIG. 8, prior to insertion, a portion of the compression ring extends outside of the groove 316. In order for the compression ring 330 to be positioned in the plate cavity 306, the compression ring 330 deforms (e.g., compresses, etc.). As the lower edge 802 of the cover body 310 is inserted into the plate cavity 306, the compression ring 330 moves (e.g., rolls, slides etc.) toward the first groove surface 318 (e.g., upward, etc.). As shown in FIG. 8, the compression ring 330 is in contact with each of the first groove surface 318 and the third groove surface 322 during insertion of the cover 110.

As previously described, the first depth D₁ of the groove 316 at the first groove surface 318 is larger than the second depth D₂ at the second groove surface 320. The second angle A₂ of the third groove surface 322 facilitates the movement of the compression ring 330 toward the first groove surface 218 (e.g., into the first depth D₁, upward, etc.). For example, the second angle A₂ biases the compression ring toward the first depth D₂. Further the cylindrical shape of the compression ring 330 facilitates a rolling movement along the third groove surface 322.

By the compression ring 330 moving towards the first groove surface 318 such that the compression ring 330 is in contact with the first groove surface 318 and the third groove surface 322, the compression ring 330 is positioned in the first depth D₁ of the groove 316 (e.g., a larger portion of the groove, etc.). When the compression ring 330 is positioned in contact with the first groove surface 318 and the third groove surface 322, a force 804 (e.g., a compressive force, an outward force, etc.) is exerted on the compression ring 330 by the plate body 104 (e.g., the transition edge 704, etc.). Because the plate wall 304 extends at the first plate wall angle A relative to the raised portion 702 of the plate body 104, the transition edge 704 extends further into the opening 108 than the edge 305 (e.g., the radius of the opening 108 is smaller at the transition edge 704 than at the edge 305, etc.) such that the force 804 exerted on the compression ring 330 is increased and the insertion force required for inserting the cover 110 though the opening 108 into the plate cavity 306 is increased.

For example, the force 804 exerted on the compression ring 330 at the first position shown in FIG. 8, this requires a greater insertion force to place the cover 110 in the opening. Then, once the cover 110 and the compression ring 330 move past the transition edge 704 the compressive force exerted on the compression ring 330 decreases as the cover 110 and the compression ring move towards the edge 305. The compressive force decreases because the opening radius increases due to the angle of the plate wall 304.

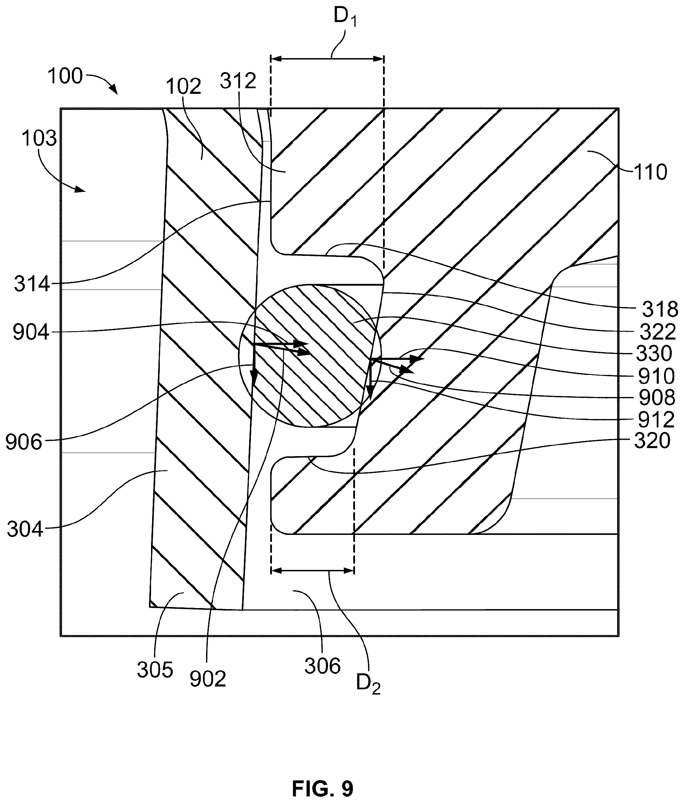

Now referring to FIG. 9, another cross-sectional view of the cover assembly 100 is shown. According to this embodiment, the cover 110 is inserted into the plate cavity 306 (e.g., positioned in a second position, an operating position, etc.).

When the cover 110 is positioned in the second position fully seated in the opening 108 (e.g., the cover rim 326 is in contact with the raised portion 702 of the plate body 104), the compressive force exerted on the compression ring 330 is less than in the first position due to the angle of the plate wall 304.

As shown in FIG. 9, a force 902 (e.g., a first force, a compressive force, a normal force, a force normal to the plate wall 304, etc.) is being exerted by the plate wall 304 onto the compression ring 330. The first force 902 exerted onto the compression ring 330 is perpendicular to the plate wall 304. Because the plate wall 304 is positioned at an angle (e.g., the first wall angle A₁, etc.) relative to the plate body 104, the first force 902 includes a first component 904 in the x-direction and a second component 906 in the y-direction. For example, the second component 906 in the y-direction biases the cover 110 into the plate cavity 306.

As shown in FIG. 9, when the cover 110 is fully seated in opening 108 (e.g., in the second position, etc.), a second force 908 is provided (e.g., exerted, etc.) between the compression ring 330 and the third groove surface 322. The second component 906 is a force perpendicular to (e.g., normal to, etc.) the third groove surface 322.

As previously described, the third groove surface 322 is positioned at the second angle A₂ relative to the first groove surface 318. Similar to the first force 902, the second force 908 also includes a first component 910 (e.g., in the x-direction, a horizontal direction, etc.) and a second component 912 (e.g., in the y-direction, in a vertical direction, etc.).

The third groove surface 322 positioned at the second angle A₂ facilitates (e.g., provides, etc.) a greater (e.g., larger, etc.) second component 912 than the second component 906 of the first force 902 which further biases (e.g., forcing, etc.) the cover 110 into the plate cavity 306.

Further, during removal of the cover 110, the compression ring 330 moves (e.g., rolls, slides, moves in a direction towards the edge 305, etc.) such that the compression ring 330 is in contact with the second groove surface 320 and the third groove surface 322. For example, the compression ring 330 is positioned in the second depth D₂ of the groove 316 (e.g., a third position, etc.). When the compression ring 330 is in the third position, a force (e.g., a third force, etc.) exerted on the compression ring 330 increases. For example, the compressive force exerted on the compression ring 330 in the third position increases due to the reduction in depth (e.g., space, etc.) of the groove 316 where the compression ring 330 is positioned. For example, the increase in compressive force exerted on the compression ring 330 in the third position increases the removal force required to remove the cover 110 from the opening 108 impeding movement of the cover 110 out of the opening 108 during operation while facilitating the ability to remove the cover 110 by a user (e.g., for servicing, etc.).

During removal of the cover 110, the second angle A₂ of the third groove surface 322 also facilitates movement of the compression ring 330. For example, forces exerted on the compression ring 330 via contact with the plate wall 304 (e.g., frictional forces, compression forces, etc.), cause the compression ring 330 to roll towards the second groove surface 320 (e.g., downward, in an opposite direction as the cover 110, etc.). However, the second angle A₂ of the third groove surface 322 biases the compression ring 330 towards the first groove surface 318 where the depth (e.g., the first depth D₁, etc.) of the groove is larger.

While this specification contains many specific implementation details, these should not be construed as limitations on the scope of what may be claimed but rather as descriptions of features specific to implementations. Certain features described in this specification in the context of separate implementations can also be implemented in combination in a single implementation. Conversely, various features described in the context of a single implementation can also be implemented in multiple implementations separately or in any suitable subcombination. Moreover, although features may be described as acting in certain combinations and even initially claimed as such, one or more features from a claimed combination can, in some cases, be excised from the combination, and the claimed combination may be directed to a sub combination or variation of a sub combination.

As utilized herein, the terms "substantially" and similar terms are intended to have a broad meaning in harmony with the common and accepted usage by those of ordinary skill in the art to which the subject matter of this disclosure pertains. It should be understood by those of skill in the art who review this disclosure that these terms are intended to allow a description of certain features described and claimed without restricting the scope of these features to the precise numerical ranges provided. Accordingly, these terms should be interpreted as indicating that insubstantial or inconsequential modifications or alterations of the subject matter described and claimed are considered to be within the scope of the present disclosure.

The term "coupled" and the like, as used herein, mean the joining of two components directly or indirectly to one another. Such joining may be stationary (e.g., permanent) or moveable (e.g., removable or releasable). Such joining may be achieved with the two components or the two components and any additional intermediate components being integrally formed as a single unitary body with one another, with the two components, or with the two components and any additional intermediate components being attached to one another.

It is important to note that the construction and arrangement of the system shown in the various example implementations is illustrative only and not restrictive in character. All changes and modifications that come within the spirit and/or scope of the described implementations are desired to be protected. It should be understood that some features may not be necessary, and implementations lacking the various features may be contemplated as within the scope of the application, the scope being defined by the claims that follow. When the language "a portion" is used, the item can include a portion and/or the entire item unless specifically stated to the contrary.

Also, the term "or" is used in its inclusive sense (and not in its exclusive sense) so that when used, for example, to connect a list of elements, the term "or" means one, some, or all of the elements in the list. Conjunctive language such as the phrase "at least one of X, Y, and Z," unless specifically stated otherwise, is otherwise understood with the context as used in general to convey that an item, term, etc. may be either X, Y, Z, X and Y, X and Z, Y and Z, or X, Y, and Z (i.e., any combination of X, Y, and Z). Thus, such conjunctive language is not generally intended to imply that certain embodiments require at least one of X, at least one of Y, and at least one of Z to each be present, unless otherwise indicated.

Additionally, the use of ranges of values (e.g., W to P, etc.) herein are inclusive of their maximum values and minimum values (e.g., W to P includes W and includes P, etc.), unless otherwise indicated. Furthermore, a range of values (e.g., W to P, etc.) does not necessarily require the inclusion of intermediate values within the range of values (e.g., W to P can include only W and P, etc.), unless otherwise indicated.

## Claims

1. A cover assembly for an engine system comprising:
a gear plate comprising:
a plate body defining an opening, and
a plate wall contiguous with the plate body along the opening and extending at a first angle away from the plate body;
a cover comprising a cover rim contacting the plate body and a cover body positioned adjacent to the plate wall and defining a groove, the groove defined by:
a first groove surface,
a second groove surface positioned a distance away from the first groove surface, and
a third groove surface extending at a second angle from the first groove surface to the second groove surface; and
a compression ring positioned in the groove and contacting the plate wall.

2. The cover assembly of claim 2, wherein the cover comprises a contact surface extending from the cover rim to the cover body, the contact surface having a first radius of curvature, the contact surface positioned on the plate body along the opening.

3. The cover assembly of claim 1, wherein the compression ring forms a seal between the plate wall and the cover body, and/or wherein the cover body comprises an outer surface, and wherein each of the first groove surface and the second groove surface are substantially perpendicular to the outer surface.

4. The cover assembly of claim 1, wherein the plate wall exerts a first force on the compression ring when the cover is at a first position and exerts a second force on the compression ring when the cover is at a second position, the compression ring positioned adjacent to the first groove surface in the first position and is positioned adjacent to the third groove surface in the second position.

5. The cover assembly of claim 7, wherein the plate wall exerts a third force on the compression ring when the cover is at a third position, wherein the compression ring is positioned adjacent to the second groove surface the third force biases the cover into the opening.

6. The cover assembly of claim 1, wherein the first angle that the plate wall extends from the plate body is between 85 and 89 degrees.

7. The cover assembly of claim 1, wherein the plate wall defines a plate cavity extending from the opening to an edge of the plate wall.

8. The cover assembly of claim 10, wherein the gear plate includes a raised portion positioned around a circumference of the opening, the plate wall extending from the raised portion into the plate cavity at the first angle.

9. An engine system assembly, comprising:
a cover assembly comprising:
a gear plate comprising:
a plate body defining an opening, and
a plate wall contiguous with the plate body along the opening and extending at a first angle away from the plate body, the plate wall defining a plate cavity extending from the opening to an edge of the plate wall;
a cover comprising a cover rim contacting the plate body and a cover body positioned adjacent to the plate wall and defining a groove, the groove defined by:
a first groove surface,
a second groove surface positioned a distance away from the first groove surface, and
a third groove surface extending at a second angle from the first groove surface to the second groove surface; and
a sealing member positioned in the groove and contacting the plate wall; and
a pump shaft, a portion of the pump shaft extending into the plate cavity adjacent to the plate wall toward the opening.

10. The engine system assembly of claim 13, wherein the gear plate includes a raised portion positioned around a circumference of the opening, and wherein the pump shaft extends into the plate cavity but not past the raised portion.

11. The engine system assembly of claim 13, wherein the cover body comprises an outer surface, and wherein each of the first groove surface and the second groove surface are substantially perpendicular to the outer surface.

12. The cover assembly of claim 1 or the engine system assembly of claim 13, wherein the cover rim defines a first radius, and wherein the cover body comprises a second radius less than the first radius.

13. The cover assembly of claim 1 or the engine system assembly of claim 13, wherein the groove has a first depth defined by the first groove surface and a second depth defined by the second groove surface, the first depth greater than the second depth.

14. The cover assembly of claim 5 or the engine system assembly of claim 13, wherein the second angle that the third groove surface extends from the first groove surface to the second groove surface is not equal to 90 degrees.

15. The engine system assembly of claim 13, wherein the opening defines an opening center axis, and wherein, the cover and the pump shaft are centered on the opening center axis.
